# EUROPEAN PATENT APPLICATION

(11) **EP 2 787 771 A1**
(43) Date of publication of application: **08.10.2014**
(21) Application number: 13305429.6
(22) Date of filing: 03.04.2013
(51) Int. Cl.: H04W 48/16

(54) **Method for accessing a short range communication network, corresponding device and system**

(71) Applicant: Gemalto SA, 92190 Meudon (FR)
(72) Inventor: Phan, Ly Thanh, 13705 La Ciotat (FR)

(57) **Abstract**

The invention relates to a method 20 for accessing a short range communication network, said first network. The first network is accessible from at least one access point 18.

According to the invention, the method comprises the following steps:
- a device 14 accesses 38, 310 locally at least one rule relating to a selection of at least one access point, the at least one rule including at least one criterion to be assessed to determine at least one available access point relating to the first network to be attached to;
- the device receives, from at least one access point 16, 18, 110 available in the vicinity of the device, first data 32, 34, 36 ; and
- the device determines based upon the first data whether each available access point does or does not satisfy the at least one rule.

The invention also relates to corresponding device and system.

## Description

### Field of the invention:

The invention relates generally to a method for accessing a short range communication network.

Moreover, the invention pertains to a device for accessing a short range communication network.

Finally, the invention also relates to a system for accessing a short range communication network.

The present invention is notably applicable to a Wireless Local Access Network (or WLAN), as Short Range (or SR) communication network.

### State of the art:

WO 2012/041664 A1 discloses a solution for switching from a mobile (radio communication) network to a Wi-Fi network, as SR (communication) network, so as to exchange data between a mobile device and a hotspot, as Access Point (or AP) to the SR network.

Such a known solution requires a mobile device to send to a remote server a request for attaching to a local SR network along with a device location and to receive from the remote server one or several AP identifiers.

However, such a known solution is based upon a need for a mobile device to be firstly attached to a mobile network and to know its own location, so as to switch from a mobile network to an SR network to continue communicating data.

Thus, there is a need to access from a mobile device to an SR network in a more efficient manner with respect to the known solution.

### Summary of the invention:

The invention proposes a solution for satisfying the just herein above specified need by supplying a method for accessing a short range communication network, said first network. The first network is accessible from at least one access point.

According to the invention, the method comprises the following steps:
- a device accesses locally at least one rule relating to a selection of at least one access point, the at least one rule including at least one criterion to be assessed to determine at least one available access point relating to the first network to be attached to;
- the device receives, from at least one access point available in the vicinity of the device, first data ; and
- the device determines based upon the first data whether each available access point does or does not satisfy the at least one rule.

The principle of the invention consists in that a device analyses whether one or several information items issued from one or several surrounding access points do or do not comply with one or several criterions, as rule(s) to be assessed. The device determines locally whether or not each access point that is locally present meets the rule(s) that is(are) stored at the device side.

It is to be noted that an identifier(s) relating to the surrounding AP(s) is predefined neither at a remote server side nor at the device side. On the contrary, a device deduces dynamically, further to an assessment and a determination by the device based upon an available rule(s) and information provided by a surrounding AP(s), an AP(s) that may be compliant or not with the rule(s).

The device retrieves, thanks to data originating from a locally present AP(s) and a registered or configured rule(s), an AP(s) allowing to attach to an SR (communication) network(s).

The device is thus able to decide, according to a registered rule(s), which AP(s) may be attempted to be attached to, so as to access a corresponding SR network(s).

The device has therefore no need to request a remote server an AP identifier list, so as to access, through a locally determined AP(s), a corresponding local SR network(s).

The invention solution does not require any connection to any remote server, as AP identifier provider, so as to access, through a locally determined AP(s), a corresponding SR network.

Contrary to the herein above described known solution, the device does not need to be firstly attached to another network, so as to fetch an AP identifier(s) to attach to a corresponding SR network(s).

Contrary to the herein above described known solution, the invention device does not need to update the predefined rule(s) that is(are) stored and valid in particular when roaming while the prior art device needs to update the device with a locally valid AP identifier list.

Due to a use of the locally registered or configured rule(s) and data originating from a locally present AP(s), the device determines, in an autonomous manner, an AP(s) to be used to access a corresponding SR network(s).

The invention solution allows taking into account information provided by a local surrounding AP(s), at the location and the moment, the device attempts to connect to an SR network.

The invention solution allows determining an available local AP(s) in a quicker and more efficient manner than with the known solution that requires to download from a remote server an AP identifier list at a decision moment at which an AP is to be connected to.

Such an SR network accessing invention method allows adapting to the local radio network topology or environment, i.e. the AP(s) that is(are) situated within the device surrounding area, without needing to change the stored rule(s).

The invention method does not need to involve a device user and is automatic. The invention method may be transparent to the device user.

The invention method is therefore convenient for the device user.

According to a further aspect, the invention is a device for accessing a short range communication network, said first network. The first network is accessible from at least one access point.

According to the invention, the device is adapted to:
- access locally at least one rule relating to a selection of at least one access point, the at least one rule including at least one criterion to be assessed to determine at least one available access point relating to the first network to be attached to;
- receive, from at least one access point available in the vicinity of the device, first data; and
- determine based upon the first data whether each available access point does or does not satisfy the at least one rule.

As device, it may be a user terminal or a token that is equipped with or accesses a memory for storing an AP selection rule(s) and at least one Radio-Frequency (or RF) interface to attach to an SR network.

As terminal, it may be, for instance, a laptop computer, a Personal Computer (or PC), a tablet computer, a media-player, a game console, a netbook, a handset, a Personal Digital Assistance (or PDA), or any other device that incorporates and/or accesses a memory for storing an AP selection rule(s) and at least one RF interface for exchanging data with an SR network.

The invention does not impose any constraint as to a kind of the token. In particular, the token may be removable or not from its host device.

As removable token, it may be a Subscriber Identity Module (or SIM) type card, a Secure Removable Module (or SRM), a smart dongle of the USB (acronym for "Universal Serial Bus") type, a (micro) Secure Digital (or SD) type card or a Multi-Media type Card (or MMC) or any format card or chip medium to be coupled to a host device.

According to still a further aspect, the invention is a system for accessing a short range communication network, said first network. The first network is accessible from at least one access point. The system comprises a device and a token. The token is connected or coupled to the device.

According to the invention, the token is adapted to:
- store locally at least one rule relating to a selection of at least one access point, the at least one rule including at least one criterion to be assessed to determine at least one available access point relating to the first network to be attached to; and
   the device is adapted to:
- receive, from at least one access point available in the vicinity of the device, first data; and
- determine based upon the first data whether each available access point does or does not satisfy the at least one rule.

The invention system may include a user terminal, as device, that cooperates with a token that is coupled or connected to the terminal.

### Brief description of the drawings:

Additional features and advantages of the invention will be more clearly understandable after reading a detailed description of one preferred embodiment of the invention, given as an indicative and non-limitative example, in conjunction with the following drawings:

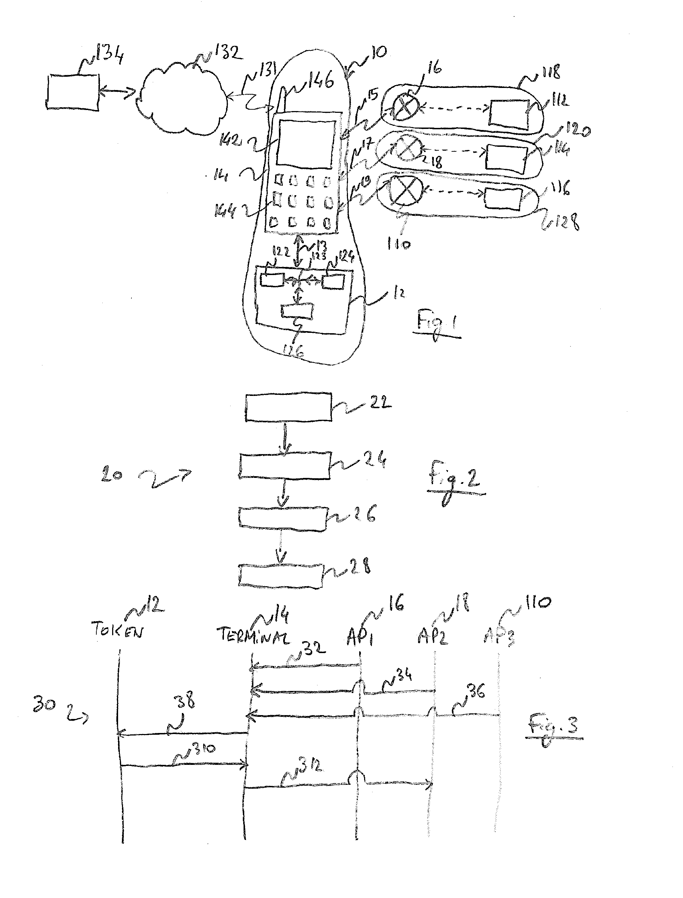

- Figure 1 illustrates a simplified diagram of one embodiment of a short range network accessing system including a mobile (tele)phone, as terminal, and a token, the system being surrounded by several available APs, so as to determine locally one available AP to access a corresponding short range network, according to the invention;
- Figure 2 is a simplified flow chart of one embodiment of the method implemented by the entities of the figure 1' system that allows the terminal to acquire information issued from the surrounding APs and to use the information with respect to one or several rules to be assessed and that are locally configured; and
- Figure 3 represents an example of one message flow between the surrounding APs, the terminal and the token of figure 1, so that the terminal attempts to attach, through a locally determined AP, to a short range network.

### Detailed description:

Herein under is considered a case in which the invention method for accessing a Short Range (or SR) (communication) network is implemented by a mobile phone, as host device, that is coupled to a chip card, as token.

Within the present description, a token is a smart object that is intended to communicate with the outside world. The token may be constituted by any electronic medium.

According to another embodiment, the invention method for accessing an SR network is implemented by one device, as stand-alone entity. In other words, the device, like a user terminal, does not cooperate with any token, so as to access an SR network. According to such an embodiment (not represented), the device is adapted to carry out the functions that are carried out by the token and the device and that are described infra.

Naturally, the herein below described embodiment is only for exemplifying purposes and is not considered to reduce the scope of the invention.

**Figure 1** shows schematically a system 10 for accessing an SR (Radio Frequency) (or RF) (communication) network.

The SR network(s) may comprise by a Wireless Local Access Network (or WLAN), a Bluetooth, a Wifi, a Metropolitan Area Network (or MAN), a Worldwide Interoperability for Microwave Access (or WiMax) and/or a WIreless BROadband (or WIBRO) radio-communication type technology(ies).

Such an SR network list is not exhaustive but only for exemplifying purposes.

The system 10 includes a Universal Integrated Circuit Card (or UICC) 12, as token, and a mobile phone 14, as user terminal and token host device.

Alternatively, instead of being a chip card that is removable from its host device, a token chip is soldered, possibly in a removable amnner, onto a Printed Circuit Board (or PCB) of the phone 14.

For sake of simplicity, the UICC 12 and the mobile phone 14 are termed herein after the token 12 and the phone 14 respectively.

According to a particular embodiment, as infra described, the system 10, or termed User Equipment (or UE), is used for accessing a hotspot, as (radio) Access Point (or AP) relating to a WLAN, as SR network.

The system 10 is located within an area where the phone 14 is able to receive data originating from several available APs, e.g. three APs, a first AP 16, a second AP 18 and a third AP 110.

It is assumed that each AP is connected to its own server and belongs to its own SR network.

The token 12 is preferably associated with a remote server 134, so as to manage remotely the token 12 from the remote server 134. The remote server 134 may be accessible via a mobile radio communication network(s) 132, as Long Range (or LR) network(s), and/or an SR network(s).

The token 12 belongs to a user. The token user has preferably, in a direct or indirect manner, subscribed to a wireless service, so as to access one or several SR networks.

The token 12 includes a chip (not represented).

The token chip includes at least one microprocessor 122, as data processing means, at least one memory 124, as data storing means, and at least one Input/Output (or I/O) interface 126 that are internally all connected, through an internal bidirectional data bus 123, to each other.

The token I/O interface(s) 126 allow(s) communicating data from the internal chip components to the chip exterior and conversely.

The token microprocessor 122 processes, controls and communicates internally data with all the other components incorporated within the chip and, through the I/O interfaces 126, with the chip exterior.

The token microprocessor 122 executes or runs one or several applications.

The token microprocessor 122 executes, in a preferred manner, one or several security applications.

The security applications include preferably a user authentication process to be used prior to accessing the token 12. To authenticate the user, the user has to provide the token 12 with user reference data that is securely stored within the token memory 124.

The security applications include preferentially an encryption/decryption process to be used before sending data to outside/after receiving data from outside, so as to protect access to data managed by or through the token 12. To encrypt data to be sent, the token 12 uses an encryption key and an encryption algorithm that are stored within the token memory 124. To decrypt received data, the token 12 may use a decryption key and a decryption algorithm that are stored within the token memory 124.

The security applications include preferentially a data signature process to be used prior to sending data, so as to prove an origin of data originating from the token 12.

The security applications include preferentially a signature verification process to be used after receiving data, so as to prove an identity of a sender of data that is received by the token 12.

The token memory 124 stores preferably one or several SIM type applications.

The SIM type application(s) include(s), among others, a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the phone 14 to authenticate to a mobile radio-communication network(s) 132.

To authenticate to the mobile radio-communication network(s) 132, the SIM type application(s) use(s) preferentially a network authentication key Ki1 relating to a subscription. The SIM type application(s) also use(s) preferably an authentication algorithm and data, as challenge that is supplied by a remote server that attempts to authenticate the considered subscriber.

The token memory 124 stores preferably one or several applications relating to an SR network(s).

The SR network application(s) allow(s) the phone 14 to authenticate to an SR network(s) 118, 120 and/or 128.

To authenticate to the SR network(s), the SR network application(s) may use a network authentication key Ki2 relating to a second subscription. The SR network application(s) also use(s) preferably an authentication algorithm and data, as challenge that is supplied by a remote server that attempts to authenticate the considered subscriber.

To authenticate to the SR network(s), the token 12 may support a default application, like an Extensible Authentication Protocol-SIM (or EAP-SIM), that allows to re-use the first credentials IMSI1/Ki1 that are stored within the token memory 124. As known per se, when the EAP-SIM is implemented, the first subscriber identity IMSI1 and the first credentials Ki1 of the token 12 that allow accessing the mobile network 132 are re-used for authenticating to an SR network 118, 120 or 128.

The token memory 124 stores preferably data relating to a Uniform Resource Identifier (or URI), a Uniform Resource Locator (or URL) and/or an Internet Protocol (or IP) address of a remote server(s), as identifier(s) of a server to be addressed.

The token memory 124 stores preferably one or several rules relating to a selection of one or several APs, as AP selection rule(s).

The token memory 124 may store two or more sets of AP selection rules. The AP selection rule sets may be active all together or separately.

Amongst the AP selection rule(s), one or several AP selection rules may be active at one and the same time.

The token on-board AP selection rule(s) is(are) accessible from the phone 14, as token host device.

The token memory 124 stores preferably one or several data files for registering the AP selection rule(s).

The AP selection rule(s) are only few data from about some tens or hundred bytes to about some kB (kilo Bytes).

The AP selection rule(s) may be predefined, modified and managed by a network operator, like a Mobile Network Operator (or MNO), a Mobile Virtual Network Operator (or MVNO), a service provider or on its behalf. There is no constraint with respect to the nature of the AP selection rule(s).

The AP selection rule(s) may be stored within the token memory 124, during a customization or personalization of the token 12, either before or after its issuance.

Each AP selection rule allows defining a classification or category of one or several AP(s) to be taken into account when a surrounding AP(s) is to be selected at the terminal side.

Each AP selection rule allows dividing APs into specific classifications or categories and separating one or several APs between each other. Each AP selection rule allows comparing different APs between each other and thus giving an AP(s) a higher preference level with respect to the other AP(s).

The token 12 stores preferably, in a secure manner, i.e. in a protected manner with respect to the token access (e.g. by using data encryption, interlocutor authentication(s), encrypted data communication,...), the AP selection rule(s).

The token 12 stores preferably, according to a priority order, the AP selection rule(s). The priority order may be predefined, modified and/or managed by an operator that manages the token 12 and/or an SR network to be attached to. The priority order may be defined in either a descending order, i.e. from the highest to the lowest priority, or an ascending order, i.e. from the lowest to the highest priority. Thus, there is at least one rule that has a predefined priority, ordering weight or preference that is higher than at least another rule.

The AP selection rule(s) relate(s) to one or several contextual information items. Such contextual information items are to be provided by an AP(s), as surrounding AP(s), that is(are) close to the terminal, as token host device.

The AP selection rule(s) include(s) one or several criterion(s) to be assessed to determine one or several APs relating to an SR network(s) to be attached to.

The criterion(s) may be a comparison reference(s) to which data provided by the available AP(s) is to be compared.

The criterion(s) may include one or several indications to know whether one or several predefined contextual information items are present or absent, and, when present, their values.

The criterion(s) may include one or several predefined thresholds of parameters relating to an access to an SR network.

As contextual information item(s), it may include data relating to a use of a token, a user terminal, an AP, an SR network and/or its attributes.

As data relating to a use of a token, it may comprise:
- one or several predefined identifiers of an operator(s) that manage(s) another network(s), like the mobile communication network 132, which the phone 14 has been attached or registered to; and/or
- one or several identified cells under a radio coverage of another network(s), like the mobile communication network 132, and in which the concerned subscriber is located.

As data relating to a use of a user terminal, like the phone 14, it may comprise:
- one or several predefined identified geographic terminal locations from which the terminal can access the available AP(s);
- one or several predefined types of the terminal. The terminal may be, for instance, a tablet, a smart phone, a non-smart phone, a laptop, a Machine to Machine (or M2M) type device;
- one or several predefined types of service offered through or by the terminal. The service may be, for instance, a service relating to Voice over Internet Protocol, Video call ;and/or
- one or several predefined configurations of the terminal from which the available AP(s) can be accessed.

As data relating to a use of an AP, it may include:
- one or several predefined validity dates at which the terminal can access the available AP(s);
- one or several predefined validity times at which the terminal can access the available AP(s);
- one or several predefined validity time periods during which the terminal can access the available AP(s);
- one or several predefined events during which the terminal can access the available AP(s);
- one or several predefined types of service offered through or by the available AP(s);
- one or several predefined Qualities of Service (or QoS) relating to the available AP(s). It may be one or several predefined minimum and/or maximum threshold(s) of QoS and/or other radio parameter(s). The QoS may be characterized by a power of a signal received and/or sent by an AP antenna (not represented);
- one or several predefined logical channels relating to the available AP(s). The logical channel(s) may comprise one voice communication channel and/or one or several data communication channels. As data communication channels, it may include an Internet Protocol (or IP) type channel and/or any other channel the bit rate of which is higher than the one related to a voice communication channel;
- one or several predefined traffic loads relating to the available AP(s); and/or
- one or several predefined bandwidths accessible through the available AP(s).

As data relating to a use of an SR network, it may include:
- one or several predefined types of service offered through or by the SR network;
- one or several predefined identifiers of an operator(s) that manage(s) an SR network accessible via the available AP(s);
- (an)other non-technical element(s), like a predefined maximum rate(s) for communicating data, one or several predefined costs for accessing an SR network (per consumption time unit and/or data unit);
- one or several predefined identifiers of MNO networks, like a Home Public Land Mobile Network(s) (or HPLMN) and/or a Public Land Mobile Network(s) (or PLMN), which the SR network has a link(s) with,
- one or several predefined identifiers of other SR network(s), like a Service Set Identifier(s) (or SSID), which the SR network has a link(s) with, and/or
- one or several predefined MVNOs, a consortium of roaming partner operator(s) or other partner operator(s).

The token memory 124 stores preferentially data relating to one or several subscriptions for accessing a mobile radio-communication network(s) 132, as LR network(s).

The data relating to one subscription to one or several LR network(s) includes:
- an IMSI, as subscriber and service subscription identifier for accessing the LR network(s) 132;
- a key Ki, as network authentication key, allowing to authenticate the concerned subscriber to the LR network(s) 132;
- an authentication algorithm allowing to authenticate the concerned subscriber to the LR network(s) 132;
- one or several passwords, like a Personal Identity Number (or PIN), and/or one or several cryptographic algorithm(s), as data relating to secret(s), possibly known to the subscriber and always securely stored within the token 12;
- a file system;
- one or several security keys, like a key(s) for encrypting/decrypting data and/or a key(s) for signing data a key(s),
- one or several applicative keys, like a key for accessing a user bank account through the LR network(s) 132 and/or a key for accessing a user bank account over a short range RF link (not represented); and/or
- one or several credentials, like a user name and/or IDentifier (or ID) of the subscriber, as data relating to the user.

The token microprocessor 122 is preferably able to initiate actions, in order to interact directly with the outside world. Such a capacity of interaction at the initiative of the token 12 is also known as proactive capacity. The token 12 is thus able to send, at its own initiative, through the phone 14, to any device connected to the phone 14 a proactive command for sending, e.g. a request for loading data relating to one or several AP selection rules, to the remote server 134.

The token 12 is under control of the phone 14.

Instead of being constituted by a phone, the token host device may be, for instance, a set-up box, a desktop computer, a laptop computer, a media-player, a game console, a tablet, a netbook, a handset, a PDA and/or a PC.

Such a host device list is not exhaustive but only for exemplifying purposes.

The phone 14 is connected, through a bi-directional link 13, to the token 12.

Instead of a phone, it may be any other device including means for processing data, comprising or being connected to SR communication means for exchanging, in a wireless manner, data with outside and comprising or being connected to means for storing data.

Within the present description, the adjective "SR" that is used within the expression "SR communication means" denotes notably that the communication means communicates via one or several SR Radio-Frequency (or RF) links.

The SR RF may be fixed at several hundreds of MHz, for instance, around 2,4 GHz to around 10 GHz (for Ultra Wide Band or UWB e.g. IEEE 802.15.4a), at 2,4-2,5 GHz with a range of about 10 m to 100 m (for Zigbee (e.g. IEEE 802.15.4), Wifi, Wifi Direct, Wifi Ad Hoc network, LTE device to device communication, LTE group communications, and Bluetooth or Bluetooth low energy (e.g. IEEE 802.15.1)) and/or other frequency value(s) allowing to communicate at SR (typically from about 20 cm to 800 m).

Such an SR RF list is not exhaustive but only for exemplifying purposes.

The phone I/O interface includes an I/O interface for exchanging data with the token 12.

The phone I/O interface with the token 12 may be an International Organization for Standardization (or ISO) 7816 type interface, as contact interface when the token 12 is inserted within the phone 14.

Instead of a contact interface, the phone I/O interface with the token 12 includes or be connected to a contact-less interface. The phone 14 includes or is connected to means for communicating data while using preferably an SR RF link. The SR RF link may be related to any technology type that allows the phone 14 to exchange data with an external proximate device. The SR RF may be fixed at 13,56 MHz and related to an NFC type technology, as contact-less technology.

Alternatively, instead of the token, the phone 14 stores within its memory (not represented) the AP selection rule(s). The AP selection rule(s) may be registered in a predefined priority order.

A rule(s) for accessing an SR network that is locally stored, be it either within the token memory 124 or the phone memory, is(are) accessible to the phone 14.

The phone 14 includes preferably a display screen 142 and a keyboard 144, as Man Machine Interface (or MMI).

Alternatively, instead of a display screen, the phone 14 is equipped with a touch sensitive display screen.

The MMI allows a phone user to interact with the phone 14.

The phone 14 comprises or accesses an SR antenna (not represented). The SR antenna allows communicating data, through an SR RF link(s) 15, 17 and/or 19, over one or several SR networks 118, 120 and/or 128, with a corresponding remote server 112, 114 and/or 116.

The phone 14 may comprise an LR antenna 146. The LR antenna 146 allows communicating data, through an LR RF link(s) 131, over one or several mobile radio-communication networks 132, with a remote server 134.

The phone 14 includes data processing means, such as one microprocessor (not represented), data storing means (not represented), as phone memory, and at least one Input/Output (or I/O) interface that are linked all together through a control and data bus (not represented).

The phone 14 plays, in a preferential manner, a role of a modem, so as to exchange data notably between the phone 14 and an SR network 118, 120 or 128.

The phone 14 carries out the following operations:
- a modulation of an analogical carrier signal to encode digital information to be transmitted, over the SR antenna, to a remote server 112, 114 or 116, and
- a demodulation of a received analogical carrier signal to decode the encoded digital information that is received, over the SR antenna, from the remote server 112, 114 or 116.

The phone memory may comprise one or several memories, such as a flash memory(ies) and/or a hard disk drive(s).

The phone memory stores preferably a phone identifier, like an International Mobile Equipment Identity (or IMEI).

The phone memory stores an Operating System (or OS) and one or several applications.

The phone 14 executes preferably an invention application to get information from an available AP(s) and to access AP selection rule(s), so as to access an SR network(s).

To carry out an access to an SR network(s), a phone microprocessor, as data processing means, executes preferably an agent, as invention application that the phone 14 supports, i.e. stores within its memory.

According to another embodiment, the agent is supported by the token 12.

According to still another embodiment, the agent is supported by the token 12 and the phone 14.

Prior to an execution of the agent, none of the first AP 16, the second AP 18 and the third AP 110 is registered within the concerned token 12 or phone 14. Once the phone 14 (or the token 12) has determined the available AP(s) that does or does not satisfy the registered AP selection rule(s) by executing the agent, the phone 14 has preferably generated, thanks to acquired data, an identifier relating to an available AP(s) that allows accessing preferably an SR network.

A triggering of an execution of the agent may occur further to an occurrence of a predetermined event(s). As predetermined event(s), it may include an SR network reception activation of the phone 14, an overload of a currently attached network (such as a mobile network or an SR network), a loss of a currently attached network reception (like a mobile network or an SR network), a change of geographic location (country, region,...) in which the phone 14 is located, a change of cell that is associated with a base station which the phone 14 is attached to and/or a reception by the agent of an execution command originating from an external entity, like the token 12.

According to one invention feature, the phone 14 is adapted to:
- receive, from one or several APs that are available in the vicinity of the phone 14, data; and
- determine based upon the received data whether each available AP does or does not satisfy the AP selection rule(s).

To determine whether the available AP(s) is(are) compliant with the AP selection rule(s), the phone 14 compares information, as data provided by the available AP(s), with respect to the registered AP selection rule(s), as AP selection criterion(s).

Due to a use of data originating from the available AP(s) and internal rules for accessing an SR network, the phone 14 is able to select automatically and dynamically, i.e. at the phone location and at the current time, an available AP to connect to.

The phone 14 is preferably adapted to classify or rank, according to a predefined priority order, each determined available AP, by storing data relating to each concerned available AP, like an SSID, as AP identifier.

The predefined priority order relating to an AP classification is preferably the predefined priority order relating to the AP selection rule(s).

When executed and one or several available APs have been assessed based upon the get data and the registered AP selection rule(s), the agent allows storing within the phone memory one or several determined available AP(s), as (pre-)selected available AP(s).

Alternatively, instead of storing the selected available AP(s) within the phone memory, the phone 14 stores the selected available AP(s), as result of the agent execution, into the token memory 124.

The agent may further allow the phone 14 to send to a thus identified available AP(s), a request for attaching to a corresponding SR network(s).

As to the available AP, it may be any device including means for processing data (not represented), comprising or being connected to RF communicating means containing one or several SR antennas for sending to and/or receiving data from outside, comprising means (not represented) for storing data, and comprising means for communicating with a network, like Internet.

The phone 14 is under a radio coverage of the SR network.

Each AP includes preferably at least one microprocessor (not represented), as data processing means, at least one memory (not represented) and at least two I/O interfaces.

The first AP 16 may be connected, through a bi-directional first SR link 15, to the phone 14.

Likewise, the second AP 18 and the third AP 110 may be connected, through a bi-directional second SR link 17 and a bi-directional third SR link 19 respectively, to the phone 14.

The first AP 16 is connected to a first SR server 112. Likewise, the second AP 18 and the third AP 110 are connected to a second SR server 114 and a third SR server 116 respectively.

The first SR server 112 belongs to a first SR network 118. Likewise, the second SR server 114 and the third SR server 116 belong to a second SR network 120 and a third SR network 128 respectively.

Each AP has its own identifier, like a Media Access Control (or MAC) address for Bluetooth or SSID for Wifi.

Each AP memory may store user data, like a User IDentifier and/or a user password, as second credentials, that allow identifying and authenticating a user of the concerned AP.

Each AP microprocessor processes data originating from the AP memory and, through the AP I/O interfaces, external entities, like the phone 14 and its related remote server.

Each AP microprocessor executes preferably a security function(s), in order to protect access to information managed through or by the AP.

The security functions may include an encryption/decryption process to be used before sending to/after receiving from an interlocutor device data, so as to protect access to data thus exchanged between the AP and the interlocutor device.

Each AP may be located within a home of an individual or premises of an enterprise or another public area.

Each AP may be portable and therefore movable.

Each AP may consist of a mere intermediary communication entity relaying information between the phone 14, as interlocutor device, and its related SR server.

Each SR server 112, 114, or 116 is hosted by a computer.

Each SR server 112, 114, or 116 is identified by a URI, like an URL, or an IP address, as server identifier. The SR server identifier may be stored within either the token memory 124 or a phone memory.

Each SR server 112, 114, or 116 is preferably able to encrypt/decrypt data to be exchanged with the token 12 and/or the phone 14, as SR server interlocutor(s), by using an encryption/decryption key(s) shared with the SR server interlocutor(s).

**Figure 2** shows one example of a sequence 20 of steps that is implemented by the phone 14 (or the token 12), so as to control by itself an access to an SR network.

It is assumed that the AP selection rule(s) is(are) active.

Firstly, the phone 14 scans 22 broadcast data originating from the surrounding available APs.

The broadcast data includes data relating to each available AP and associated data relating to a use of the concerned SR network.

The data relating to each available AP includes one or several identifiers relating to the concerned AP.

As known per se, each available AP regularly broadcasts data, so as to indicate its presence to a surrounding potential interlocutor device(s).

The phone 14 captures the broadcast data.

Then, the phone 14 assesses 24 the broadcast data with respect to accessible registered or stored rule(s).

Further to such an assessment, the phone 14 determine(s) 26 an available AP set that comprises one or several available AP(s) that is more or less compliant with the stored rule(s). The phone 14 creates or generates an identifier relating to each determined available AP based upon the broadcast data.

The phone 14 classifies, ranks or orders 28 preferably the thus generated available AP set while allocating to each of the available AP a priority order. The thus generated available APs are ordered and therefore prioritized. The allocated priority order may be based upon one or several network operator preferences and/or a user preference.

**Figure 3** depicts an exemplary embodiment of a message flow 30 that involves notably the token 12, the phone 14 and the first 16, second 18 and third 110 APs.

In the explained example, it is assumed that the token 12 is coupled to the phone 14, as device which supports an application that requests to access an SR network.

Optionally, the token 12 authenticates successfully the token user. To authenticate the token user, she/he submits data, like a PIN or biometric data, that is stored within the token memory 124 and deemed as belonging to an authorized user.

It is assumed that the token 12 stores only one active AP selection rule set.

However, the invention is also applicable when several AP selection rule sets are simultaneously active.

It is also assumed that the token 12 stores an authentication algorithm to connect to each of the three accessible SR networks 118, 120 and 128.

It is further assumed that the active AP selection rules include two rules, namely a first criterion requests to access a specified type of service, like a video-sharing website on which users can view a video, as video-sharing service and a second criterion consisting in having a high QoS. It is assumed that the first AP selection rule has a higher priority order, weight or significance than the second AP selection rule while being of different categories.

However, the invention is also applicable when the active AP selection rules include more than two AP selection rules. The active AP selection rules may include an ordered list of one or several operators that are predefined by either an operator, like an SR network access provider, or the phone user.

It is finally assumed that the first AP 16 provides a video-sharing service with a low definition quality, the second AP 18 a video-sharing service with a High Definition (or HD) quality and the third AP 110 an email service while being specified within data that each of them broadcasts.

The first AP 16 broadcasts a first message 32 including, as information, AP1, as first AP identifier, and a video-sharing service with a low definition quality, as data relating to a use of the first SR network 118.

The second AP 18 broadcasts a second message 34 including, as information, AP2, as second AP identifier, and a video-sharing service with an HD quality, as data relating to a use of the second SR network 120.

The third AP 110 broadcasts a third message 36 including, as information, AP3, as third AP identifier, and email service, as data relating to a use of the third SR network 128.

Each available AP 16, 18 and 110 includes in a message to be sent notably data for identifying the concerned AP, as AP identifier, namely AP1, AP2 and AP3 respectively, so as to be able to recognize the message sender.

The phone 14 is located in the vicinity of the first 16, second 18 and third 110 APs.

The phone 14 receives the corresponding first 32, second 34 and third 36 messages.

Then, the phone 14 extracts and stores the content of each received message 32, 34 and 36.

The phone 14 sends to the token 12 a request 38 for retrieving active AP selection rules, so as to read the locally accessible AP selection rules.

The token 12 sends to the phone 14 the AP selection rules, as request response 310.

The phone 14 analyses each received message content with respect to each retrieved AP selection rule.

The phone 14 determines based upon the content data whether each available AP does or does not satisfy the predefined or configured AP selection rules, as criterions to be assessed.

The phone 14 allocates particular data, like one bit value when the considered available AP does satisfy an AP selection rule and another bit value when the considered available AP does not satisfy the AP selection rule, for each rule.

The phone 14 rates thus each available AP with respect to the two AP selection rules, so as to compare the available APs amongst them.

The phone 14 may establish a table for ranking the available three APs, according to a priority order that is preferably defined by the priority order of the AP selection rules.

The phone 14 generates the following ranking of the three available APs based upon the AP selection rules and the received data originating from the three surrounding APs.

For example, a ranking amongst the identified available APs may be based upon the following table with their corresponding ranking value.

| **AP IDentifier** | **Descending Priority Order** |
|---|---|
| AP2 | 11 |
| AP1 | 10 |
| AP3 | 00 |

Once the phone 14 has determined, ordered the available APs and stored the resulting information, the phone 14 selects the second AP 18, as the identified AP with the highest priority order.

Then, the phone 14 transmits to the second AP 18, as the identified AP with the highest priority order, a message 312 including a request for associating with the corresponding SR network.

The token 12 user may then continue an attachment procedure while authenticating to the corresponding SR network 120 by using the credentials that are stored within either a phone memory or the token memory 124.

The invention solution allows taking into account the information sent by the available APs and thus accelerating an access time to a server accessible through a thus selected AP.

The invention solution may allow a home operator to keep control over an AP selection method and therefore an SR network access while configuring the stored AP selection rule(s).

The invention solution is compatible notably with the existing SIM type smart cards, handsets, mobile network servers and other existing rules.

The invention solution is flexible since the mere provision of AP selection rules allows to be applicable to many locations without needing to download a corresponding AP identifier list while changing from one location to another location.

The invention solution is preferably secure while authenticating the token user and/or the token 12, and/or exchanging data in a confidential manner.

The invention solution may be advantageously used in a WLAN Network Selection (or WLAN NS) process as specified notably in the 3GPP (acronym for "third Generation Partnership Project") Technical Specifications (or TS) 24.234.

## Claims

1. A method for accessing a short range communication network, said first network, the first network (120) being accessible from at least one access point (18),
**characterized in that** the method comprises the following steps:
- a device (14) accesses (38, 310) locally at least one rule relating to a selection of at least one access point, the at least one rule including at least one criterion to be assessed to determine at least one available access point relating to the first network to be attached to;
- the device receives, from at least one access point (16, 18, 110) available in the vicinity of the device, first data (32, 34, 36) ; and
- the device determines based upon the first data whether each available access point does or does not satisfy the at least one rule.

2. Method according to claim 1, wherein the device classifies, according to a predefined priority order, each determined available AP by storing data relating to each determined available access point.

3. Method according to claim 1 or 2, wherein, a token (12) connected or coupled to the device, the token stores securely the at least one rule relating to an access point selection, each rule defining a classification or category of at least one access point to be taken into account when selecting at least one access point.

4. Method according to any of claims 1 to 3, wherein the at least one rule relating to an access point selection relates to at least one contextual information item that is comprised within a group comprising data relating to a use of:
- a device;
- an available access point; and/or
- a short range communication network.

5. Method according to any of claims 1 to 4, wherein the device or a token connected or coupled to the device stores the at least one rule relating to an access point selection according to a priority order.

6. Method according to any of claims 1 to 5, wherein, prior to sending data to attempt to attach to the first network, the device selects at least one determined available access point.

7. Method according to any of claims 1 to 6, wherein the first data includes data relating to each available access point and associated data relating to a use of a concerned first network.

8. Method according to claim 7, wherein the data relating to each available access point includes at least one identifier relating to the access point.

9. A device (14) for accessing a short range communication network, said first network (120), the first network being accessible from at least one access point (18),
**characterized in that** the device is adapted to:
- access (38, 310) locally at least one rule relating to a selection of at least one access point, the at least one rule including at least one criterion to be assessed to determine at least one available access point relating to the first network to be attached to;
- receive, from at least one access point (16, 18, 110) available in the vicinity of the device, first data (32, 34, 36); and
- determine based upon the first data whether each available access point does or does not satisfy the at least one rule.

10. A system (10) for accessing a short range communication network, said first network (120), the first network being accessible from at least one access point (18), the system comprising a device (14) and a token (12), the token being connected or coupled to the device,
**characterized in that** the token is adapted to:
- store locally at least one rule relating to a selection of at least one access point, the at least one rule including at least one criterion to be assessed to determine at least one available access point relating to the first network to be attached to; and
**in that** the device is adapted to:
- receive, from at least one access point (16, 18, 110) available in the vicinity of the device, first data (32, 34, 36); and
- determine based upon the first data whether each available access point does or does not satisfy the at least one rule.
